# FASCICULE DE BREVET EUROPEEN

(11) **EP 1 022 172 B1**
(45) Date de publication et mention de la délivrance du brevet: **20.12.2006**
(21) Numéro de dépôt: 00460006.0
(22) Date de dépôt: 21.01.2000
(51) Int. Cl.: B60J 5/04, B60J 1/16, B62D 65/06

(54) **Procédé de fabrication d'une portière pour véhicule automobile, et portière correspondante**
Herstellungsverfahren einer Fahrzeugtür, und korrespondierende Tür
Process for manufacturing of a motor vehicle door, and corresponding door

(30) Priorité: 21.01.1999 FR 9900890
(43) Date de publication de la demande: 26.07.2000
(73) Titulaire: WAGON SAS, 79300 Bressuire (FR)
(72) Inventeur: Chauvin, René M., 79300 Bressuire (FR)
(74) Mandataire: Vidon, Patrice

(56) Documents cités:
- EP-A- 0 495 712
- EP-A- 0 778 168
- EP-A- 0 857 844
- FR-A- 2 552 483
- FR-A- 2 750 654
- US-A- 3 799 607

## Description

Le domaine de l'invention est celui de la construction des véhicules automobiles. Plus précisément, l'invention concerne la fabrication de portières pour ces véhicules automobiles, voir par example le EP 495 712 A.

Classiquement, une portière de véhicule automobile présente une partie inférieure pleine, et une partie supérieure vitrée. Généralement, la partie vitrée est définie par un cadre supérieur, dans lequel une vitre vient se loger. Ce cadre est formé dans la structure de la portière.

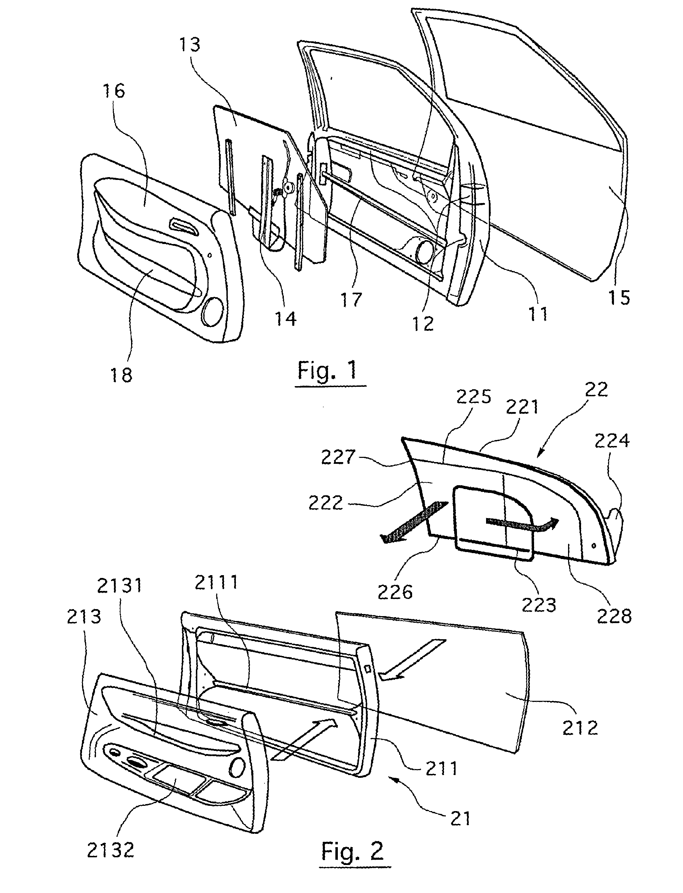

Un exemple de portière de ce type, qui correspond à la plupart des portières actuellement installées sur des véhicules, est illustré en figure 1. Une telle portière présente un élément de structure 11, à l'intérieur duquel sont montés les moyens 12 d'ouverture et de verrouillage de la portière, ainsi qu'une vitre 13 et le mécanisme 14 permettant son coulissement, dans une fente prévue à cet effet, ménagée dans la partie inférieure de la portière.

On rapporte ensuite un panneau de carrosserie extérieur 15, et un garnissage intérieur 16.

Les portières de ce type présentent de nombreux inconvénients. Elles supposent un nombre important de composants à assembler, et leur assemblage est long et délicat à mettre en oeuvre, en particulier en ce qui concerne la vitre coulissante 13, qui doit être mis en place très précisément.

L'équipement permettant le déplacement de la vitre 13, qu'il s'agisse d'un mécanisme manuel ou électrique, est complexe, lourd et encombrant.

De plus, le fait que la vitre puisse prendre place à l'intérieur de la partie inférieure de la portière pose divers problèmes, tant sur le plan de la sécurité (positionnement et dimensionnement des renforts latéraux 17), que de l'esthétique ou de l'ergonomie (dimensionnement des rangements 18).

La présence d'un cadre supérieur solidaire de la partie inférieure, tant sur l'élément de structure 11 que sur le panneau de carrosserie 15, rend également peu aisés la fabrication et le montage de la portière, d'autant plus qu'un joint adapté doit être mis en place dans ce cadre, pour assurer l'étanchéité.

Certains constructeurs ont présenté des véhicules dont les portières ne présentent pas de tels cadres supérieurs, la vitre assurant seule l'obturation de la partie supérieure. Dans ce cas, d'autres problèmes apparaissent, liés en particulier à la rigidité de l'ensemble et à l'étanchéité.

L'étanchéité est, par ailleurs, un problème important au niveau de la fente par laquelle la vitre peut coulisser à l'intérieur de la portière. En effet, quelle que soit l'efficacité des joints mis en oeuvre, la poussière et l'humidité finissent par pénétrer à l'intérieur de la portière, ce qui peut, à plus ou moins long terme, altérer ou détériorer le fonctionnement du mécanisme d'ouverture de la portière, et/ou celui de la vitre.

L'invention a notamment pour objectif de pallier ces différents inconvénients de la technique antérieure.

Plus précisément, un objectif de l'invention est de fournir un procédé de fabrication d'une portière pour véhicule automobile, qui soit plus simple et plus rapide à mettre en oeuvre que les procédés de fabrication connus.

Un autre objectif de l'invention est de fournir une portière, et le procédé de fabrication correspondant, qui présente un nombre de composants et un poids réduit, par rapport aux techniques connues.

L'invention a également pour objectif de fournir une telle portière, pour laquelle l'étanchéité est améliorée, sans moyens spécifiques complexes ou coûteux.

Encore un autre objectif de l'invention est de fournir un procédé de fabrication qui permette de réaliser des portières présentant des caractéristiques nouvelles, notamment en ce qui concerne l'esthétisme et l'ergonomie, et notamment des portières qui libèrent un espace plus important, pour les passagers et/ou pour des rangements intérieurs.

Ces objectifs, ainsi que d'autres qui apparaîtront plus clairement par la suite, sont atteints selon l'invention à l'aide d'un procédé de fabrication d'une portière pour véhicule automobile, selon lequel ladite portière est réalisée en deux parties montées indépendamment l'une de l'autre :
- une partie inférieure, ne présentant aucun moyen de guidage d'une vitre mobile, et
- une partie supérieure, présentant une baie,
lesdites parties inférieure et supérieure étant ensuite solidarisées l'une à l'autre au niveau d'une zone d'assemblage de ladite portière, s'étendant sensiblement horizontalement et correspondant au dessus de ladite partie inférieure et au dessous de ladite partie supérieure.

Ainsi, l'invention repose sur une approche tout à fait nouvelle, et non évidente, des portières de véhicule automobile.

Classiquement, la partie supérieure d'une portière est physiquement liée à sa partie inférieure, dès le début du montage, par la présence d'un cadre formé dans le même élément de carrosserie et/ou par la présence des moyens permettant le coulissement de la vitre. Selon l'invention, les deux parties sont indépendantes, et ce n'est que lorsqu'elles sont finalisées qu'elles sont solidarisées.

Il n'y a aucun élément mobile et/ou partagé entre les deux parties. Elles sont simplement solidarisées. La solidarisation est effectuée au niveau d'une zone d'assemblage, qui correspond sensiblement au bas de la partie supérieure (zone sur laquelle s'étend, classiquement, la fente permettant le coulissement de la vitre, dans les portières de type connu).

De façon avantageuse, ladite partie supérieure de portière comprend des moyens d'obturation de ladite baie, comprenant un ensemble fixe et au moins un panneau mobile, ledit panneau mobile permettant de libérer ou d'obturer une ouverture ménagée dans ledit ensemble fixe.

En d'autres termes, la partie supérieure peut avantageusement porter une fenêtre baie "flush", selon la technique développée par le déposant de la présente demande de brevet.

Dans ce cas, préférentiellement, ledit panneau mobile est monté sur au moins un élément de support et/ou de guidage (par exemple des rails) solidaire dudit ensemble fixe.

Selon un mode de réalisation avantageux de l'invention, ladite partie supérieure de la portière comprend, sur sa face intérieure, un cadre ou au moins un montant sensiblement vertical.

De façon préférentielle, au moins une des extrémités d'au moins un desdits éléments de support et/ou de guidage est solidarisée audit cadre ou auxdits montants sensiblement verticaux desdits moyens d'obturation.

Ainsi, en cas de bris accidentel de l'ensemble fixe, le panneau mobile reste maintenu, et ne risque pas de blesser le conducteur ou son passager.

Selon un autre aspect de l'invention, ladite étape de réalisation d'une partie inférieure de portière comprend avantageusement l'assemblage, sur un élément de structure, d'un panneau de carrosserie extérieur et d'un garnissage intérieur.

Par rapport aux méthodes classiques, ces opérations sont donc très simples, notamment du fait de l'absence de moyens de coulissement d'une vitre et d'un cadre supérieur (qu'il convient d'équiper d'un joint).

Ladite étape de solidarisation peut notamment mettre en oeuvre au moins une des opérations appartenant au groupe comprenant le collage, le soudage ou le brasage, le rivetage.

Selon un premier mode de réalisation de l'invention, ledit panneau mobile est monté sur deux éléments de support et/ou de guidage de façon à pouvoir coulisser dans un plan sensiblement parallèle au plan formé par ledit ensemble fixe.

Notamment, ledit panneau mobile peut être monté de façon à venir dans le plan formé par ledit ensemble fixe, en position fermée.

Il peut par exemple présenter une cinématique décomposée en deux déplacements indépendants :
- un déplacement de verrouillage/déverrouillage, perpendiculaire au plan formé par ledit ensemble fixe, et permettant le passage dudit plan formé par ledit ensemble fixe à un plan de coulissement, sensiblement parallèle audit plan formé par ledit ensemble fixe,
- un déplacement par coulissement dans ledit plan de coulissement.

Selon une approche, ledit panneau mobile peut présenter une cinématique continue, assurant le passage progressif du plan formé par ledit ensemble fixe à un plan de coulissement sensiblement parallèle audit plan formé par ledit ensemble fixe.

Selon différents modes de réalisation, ledit plan de coulissement se trouve à l'intérieur du véhicule ou à l'extérieur du véhicule.

Dans un autre mode de réalisation, ledit panneau mobile est monté basculant autour d'un axe de rotation parallèle au plan formé par ledit ensemble fixe.

L'invention concerne également les portières obtenues par la mise en oeuvre du procédé décrit ci-dessus.

D'autres caractéristiques et avantages de l'invention apparaîtront à la lecture de la description suivante d'un mode de réalisation préférentiel de l'invention, donné à titre de simple exemple illustratif et non limitatif et des dessins annexés, parmi lesquels :
- la figure 1 déjà commentée en préambule, illustre, en éclaté, une portière de type connu ;
- la figure 2 illustre, en éclaté, une portière selon l'invention ;
- la figure 3 est un schéma synoptique simplifié du procédé de fabrication d'une portière telle qu'illustrée en figure 2.

Comme mentionné plus haut, l'invention propose une approche tout à fait nouvelle des portières pour véhicules automobiles, reposant sur une fabrication en deux parties indépendantes, solidarisées par exemple par collage.

La figure 2 est un exemple, en éclaté, d'une telle portière. Elle comprend une partie inférieure 21 et une partie supérieure 22. Aucun élément mobile coopérant avec les deux parties n'est prévu. Au contraire, ces deux parties sont indépendantes et autonomes, et simplement solidarisées l'une à l'autre de façon fixe et définitive, à la fin de la fabrication.

La partie inférieure 21 comprend trois composants principaux : un élément de structure 211, qui reçoit d'une part un panneau de carrosserie extérieur 212 et un garnissage intérieur 213.

Les moyens d'ouverture et de verrouillage de la portière, classiques en eux-mêmes, ne sont pas représentés. Ils sont montés sur l'élément de structure 211.

Différents avantages de l'invention apparaissent directement, au vu de cette partie inférieure 21 :
- facilité du montage, seuls trois composants (plus les moyens de verrouillage) étant nécessaires ;
- réduction du poids de l'ensemble, du fait de l'absence de la vitre coulissante et du mécanisme correspondant ;
- gain en volume, le logement 2131 et l'accoudoir 2132 ménagés dans le garnissage 213 pouvant (au moins partiellement) pénétrer à l'intérieur du volume défini par l'élément de structure 211;
- simplification du montage et amélioration des éléments de renfort latéraux 2111, du fait de l'absence de contraintes dues à une vitre coulissante;
- possibilité de nouveaux designs et choix ergonomiques ;
- suppression de tous les problèmes d'étanchéité, aucune ouverture n'étant conservée sur cette partie inférieure 21.

La partie supérieure 22 présente une fenêtre (vitre) 222, en verre ou en un matériau similaire) définissant une baie. Un cadre 221, monté sur la face interne (tournée vers l'intérieur du véhicule), suit le pourtour de la baie. Le cadre 221 peut bien sûr être réduit à deux montants sensiblement verticaux, éventuellement seulement sur une partie de la hauteur de la baie.

On notera qu'il n'y a pas de cadre externe apparent, ce qui permet d'obtenir un aspect affleurant, esthétique et aérodynamique. Le cadre interne 221 apporte de la rigidité, et maintient, le cas échéant, les rails décrits par la suite.

Bien que cette fenêtre 222 puisse être fixe, il est le plus souvent souhaité qu'elle puisse être ouverte (228), en fonction des besoins et des désirs de l'utilisateur. Dans ce cas, le système d'ouverture est réalisé dans la partie supérieure 22, indépendamment de la partie inférieure 21. Il s'agit avantageusement d'une baie "flush", telle que développée par le Déposant de la présente demande de brevet, et décrite par exemple dans la demande de brevet EP-0778 168.

Plus généralement, le mouvement relatif du panneau mobile par rapport à l'ensemble, peut être de tous types adéquats, indépendamment de la structure de la portière selon l'invention.

On peut notamment prévoir que le (ou les) panneau mobile puisse coulisser dans un plan sensiblement parallèle à celui formé par l'ensemble mobile.

Dans un mode de réalisation simplifié, un panneau mobile est guidé en coulissement par des rails, qui comprennent un joint interne de maintien et de guidage. Dans ce cas, on prévoit avantageusement des moyens d'étanchéité, lorsque le panneau mobile est en position fermée.

Selon un autre mode de réalisation, le panneau mobile ne reste pas dans un plan unique parallèle à l'ensemble fixe, mais vient au contraire dans le plan de cet ensemble fixe, en position fermée, pour obturer l'ouverture. On obtient ainsi, au prix d'un guidage plus complexe, une meilleure étanchéité et un meilleur aspect esthétique, le dispositif d'obturation apparaissant, en position fermée, comme une portion de la carrosserie, sans rupture visuelle.

Le guidage de la partie mobile peut être effectué en une seule opération progressive, ainsi que cela est proposé dans le document EP - 0 778 168 déjà cité. Selon une autre technique, la cinématique du panneau mobile peut être décomposée en deux mouvements :
- un mouvement de coulissement parallèle au plan formé par l'ensemble fixe ;
- un mouvement de verrouillage/déverrouillage perpendiculaire à ce plan.

Une telle cinématique est notamment décrite dans le document EP-0 857 844, au nom du même déposant que la présente demande de brevet.

Un exemple d'une telle baie est illustré en figure 2. La fenêtre comprend donc un ensemble fixe 221, par exemple en matière plastique transparente, dans lequel a été ménagée une ouverture 228, que vient obturer ou libérer un panneau mobile 223.

Dans les deux documents précités, la partie mobile coulisse à l'intérieur du véhicule. Il est cependant possible que le coulissement s'effectue à l'extérieur du véhicule, en adaptant à cet effet les organes d'articulation portant la partie mobile et montés dans les rails.

Selon encore une autre approche, la partie mobile peut être basculante, et non plus coulissante. Dans ce cas, un seul rail peut être suffisant. Un exemple de mise en oeuvre de ce type peut être trouvé dans le document EP - 0 778 168.

Enfin, bien sûr, plusieurs parties mobiles peuvent être prévues, éventuellement avec des montages différents (une partie coulissante et une partie basculante par exemple).

De même, l'ensemble fixe peut être réalisé en une ou plusieurs parties, en tout matériau adéquat. Il peut être partiellement translucide, et intégré dès sa fabrication les rails de guidage de la partie mobile.

Avantageusement, les rails 225 et 226 supportant le panneau mobile s'étendent (227) jusqu'au cadre (ou aux montants), et sont solidarisés à ce dernier. Ils peuvent également, notamment pour le cadre inférieur, être intégrés au cadre lui-même. Ainsi, en cas de bris accidentel de l'ensemble fixe, le panneau mobile reste en place, maintenu par le rail, et ne risque pas de blesser le conducteur ou son passager.

On notera par ailleurs que le dispositif d'obturation de l'invention n'est pas forcément strictement plan. Sa surface peut bien sûr être incurvée, en particulier pour suivre les lignes et la forme de la carrosserie du véhicule. En conséquence, le terme "plan" (plan de l'ensemble fixe, plan de coulissement) doit bien sûr être compris comme se référant à la surface de la portière. Notamment, le coulissement peut suivre une trajectoire courbe, dès lors que les rails et les moyens d'articulation qu'ils contiennent sont prévus à cet effet.

Une telle baie présente de nombreux avantages, en termes de simplicité de fabrication, de poids, de coût, d'esthétisme,... Ces différents aspects sont discutés dans les documents déjà cités.

Avantageusement, un rétroviseur 224 est monté directement sur la partie supérieure 22, plus précisément sur le cadre 221 et/ou sur l'ensemble fixe 222.

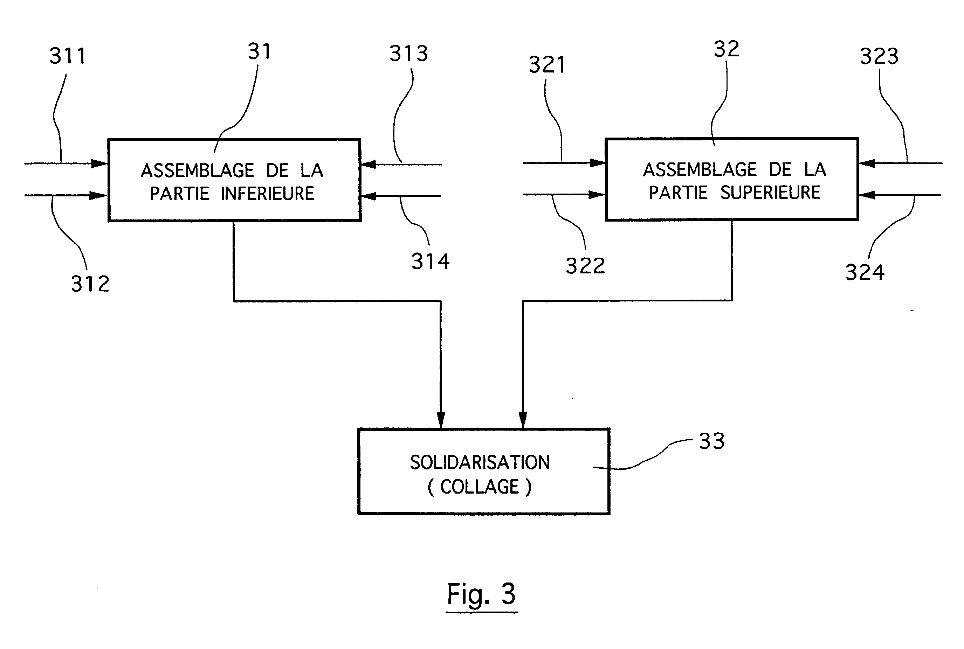

Une fois le montage de chacune des parties 21 et 22, celles-ci sont solidarisées l'une à l'autre pour former la portière définitive. La figure 3 résume ce procédé de fabrication.

Comme déjà mentionné, la fabrication d'une portière selon l'invention comprend trois étapes principales :
- l'assemblage 31 de la partie inférieure de la portière ;
- l'assemblage 32 de la partie supérieur de la portière ;
- la solidarisation 33 de ces deux parties inférieure et supérieure, par exemple par collage.

L'assemblage 31 de la partie inférieure comprend notamment la réception de l'élément de structure 311, la mise en place des moyens de verrouillage 312, puis du garnissage intérieur 313 et du panneau de carrosserie extérieur 314. Aucune ouverture (fente) n'est prévue, pour permettre le passage d'une vitre coulissante.

Réalisé indépendamment, l'assemblage 32 de la partie supérieure comprend notamment la réception de l'ensemble fixe 321 de la baie, le montage des rails 322 (à moins que ceux-ci aient été réalisés directement dans la masse de l'ensemble fixe), et la mise en place du panneau mobile 323, et des moyens de verrouillage et d'étanchéité adaptés. Le tout est ensuite mis en place sur le cadre 324.

Enfin, la solidarisation 33 de la base du cadre 324 et du dessus de la partie inférieure est effectuée. De façon préférentielle, cette solidarisation est simplifiée en prévoyant des moyens d'aide à la mise en place des deux parties l'une par rapport à l'autre, telle qu'une rainure sur la partie inférieure, prévue pour recevoir la partie supérieure (la colle et/ou un joint ayant été éventuellement placés dans ladite rainure).

## Revendications

1. Procédé de fabrication d'une portière pour véhicule automobile,
**caractérisé en ce que** ladite portière est réalisée en deux parties montées indépendamment l'une de l'autre :
- une partie inférieure (21), ne présentant aucun moyen de guidage d'une vitre mobile, et
- une partie supérieure (22), présentant une baie,
et **en ce que** lesdites parties inférieure (21) et supérieure (22) sont ensuite solidarisées (33) l'une à l'autre au niveau d'une zone d'assemblage de ladite portière, s'étendant sensiblement horizontalement et correspondant au dessus de ladite partie inférieure et au dessous de ladite partie supérieure.

2. Procédé de fabrication d'une portière selon la revendication 1, **caractérisé en ce que** ladite étape (31) de réalisation d'une partie inférieure (21) de portière comprend l'assemblage, sur un élément de structure (211), d'un panneau de carrosserie extérieur (212) et d'un garnissage intérieur (213).

3. Procédé de fabrication d'une portière selon l'une quelconque des revendications 1 et 2, **caractérisé en ce que** ladite étape de solidarisation (33) met en oeuvre au moins une des opérations appartenant au groupe comprenant le collage, le soudage ou le brasage, le rivetage.

4. Procédé de fabrication d'une portière selon l'une quelconque des revendications 1 à 3, **caractérisé en ce que** ledit panneau mobile (223) est monté sur deux éléments (225, 226) de support et/ou de guidage de façon à pouvoir coulisser dans un plan sensiblement parallèle au plan formé par ledit ensemble fixe.

5. Procédé de fabrication d'une portière selon l'une quelconque des revendications 1 à 4, **caractérisé en ce que** ledit panneau mobile (223) est monté de façon à venir dans le plan formé par ledit ensemble fixe (222), en position fermée.

6. Portière pour automobile, fabriquée selon le procédé de l'une quelconque des revendications 1 à 5, **caractérisée en ce qu'**elle comprend deux parties montées préalablement indépendamment l'une de l'autre :
- une partie inférieure (21), ne présentant aucun moyen de guidage d'une vitre mobile, et
- une partie supérieure (22), présentant une baie,
et **en ce que** lesdites parties inférieure (21) et supérieure (22) sont solidarisées (33) l'une à l'autre au niveau d'une zone d'assemblage de ladite portière, s'étendant sensiblement horizontalement et correspondant au dessus de ladite partie inférieure et au dessous de ladite partie supérieure.

7. Portière selon la revendication 6, **caractérisée en ce que** ladite partie supérieure (22) de portière comprend des moyens d'obturation de ladite baie, comprenant un ensemble fixe (222) et au moins un panneau mobile (223), ledit panneau mobile permettant de libérer ou d'obturer une ouverture (228) ménagée dans ledit ensemble fixe.

8. Portière selon la revendication 7, **caractérisée en ce que** ledit panneau mobile (223) est monté sur au moins un élément (225, 226) de support et/ou de guidage solidaire dudit ensemble fixe (222).

9. portière selon l'une quelconque des revendications 6 à 8, **caractérisée en ce que** ladite partie supérieure (22) de la portière comprend, sur sa face intérieure, un cadre (221) ou au moins un montant sensiblement vertical.

10. Portière selon les revendications 8 et 9, **caractérisée en ce qu'**au moins une des extrémités d'au moins un desdits éléments (225, 226) de support et/ou de guidage est solidarisée audit cadre (221) ou auxdits montants sensiblement verticaux desdits moyens d'obturation.

11. Portière selon une quelconque des revendications 7 à 10, **caractérisé en ce que** ledit panneau mobile (223) présente une cinématique décomposée en deux déplacements indépendants :
- un déplacement de verrouillage/déverrouillage, perpendiculaire au plan formé par ledit ensemble fixe, et permettant le passage dudit plan formé par ledit ensemble fixe à un plan de coulissement, sensiblement parallèle audit plan formé par ledit ensemble fixe,
- un déplacement par coulissement dans ledit plan de coulissement.

12. Portière selon une quelconque des revendications 7 à 10, **caractérisée en ce que** ledit panneau mobile (223) présente une cinématique continue, assurant le passage progressif du plan formé par ledit ensemble fixe à un plan de coulissement sensiblement parallèle audit plan formé par ledit ensemble fixe.

13. Portière selon l'une quelconque des revendications 11 et 12, **caractérisée en ce que** ledit plan de coulissement se trouve à l'intérieur du véhicule.

14. Portière selon l'une quelconque des revendications 11 et 12, **caractérisée en ce que** ledit plan de coulissement se trouve à l'extérieur du véhicule.

15. Portière selon une quelconque des revendications 7 à 10, **caractérisé en ce que** ledit panneau mobile est monté basculant autour d'un axe de rotation parallèle au plan formé par ledit ensemble fixe.

## Claims

1. Process for manufacturing a door for an automobile vehicle, **characterized in that** said door is made in two parts assembled independently of each other:
- a lower part (21), without guide means for a moving window, and
- an upper part (22) containing a window,
and **in that** said lower (21) and upper (22) parts are then fixed (33) to each other at an assembly area of said door, extending approximately horizontally and corresponding to the top of said lower part and the bottom of said upper part.

2. Process for manufacturing a door according to claim 1, **characterized in that** said upper part (22) of the door comprises means of closing said window, comprising a fixed assembly (222) and at least one mobile panel (223), said mobile panel being used to open or close an opening (228) formed in said fixed assembly.

3. Process for manufacturing a door according to claim 2, **characterized in that** said mobile panel (223) is mounted on at least one support and/or guide element (225, 226) fixed to said fixed assembly (222).

4. Process for manufacturing a door according to any one of claims 1 to 3, **characterized in that** said upper part (22) of the door comprises a frame (221) or at least one approximately vertical upright on its inner face.

5. Process for manufacturing a door according to claims 3 and 4, **characterized in that** at least one of the ends of at least one of said support and/or guide elements (225, 226) is fixed to said frame (221) or said approximately vertical uprights of said closing means.

6. Process for manufacturing a door according to any one of claims 1 to 5, **characterized in that** said step (31) in which a lower part (21) of the door is made advantageously includes the assembly of an outer bodywork panel (212) and an inner trim (213) on a structural element (211).

7. Process for manufacturing a door according to any one of claims 1 to 6, **characterized in that** said attachment step (33) can involve at least one of the operations belonging to the group including gluing, welding, brazing or riveting.

8. Process for manufacturing a door according to any one of claims 1 to 7, **characterized in that** said mobile panel (223) is mounted on two support and/or guide elements (225, 226) so as to slide in a plane approximately parallel to the plane formed by said fixed assembly.

9. Process for manufacturing a door according to any one of claims 1 to 8, **characterized in that** said mobile panel is mounted to fit in the plane formed by said fixed assembly (222) in the closed position.

10. Process for manufacturing a door according to claim 9, **characterized in that** the mechanism of the mobile panel (223) can be broken down into two independent displacements:
- a locking/unlocking displacement perpendicular to the plane formed by said fixed assembly, and enabling passage from said plane formed by said fixed assembly to a sliding plane approximately parallel to the plane formed by said fixed assembly,
- displacement by sliding in said sliding plane.

11. Process for manufacturing a door according to claim 9, **characterized in that** said mobile panel (223) has a continuous mechanism, such that the plane formed by said fixed assembly moves gradually into a sliding plane approximately parallel to said plane formed by said fixed assembly.

12. Process for manufacturing a door according to either of claims 10 and 11, **characterized in that** said sliding plane is located inside the vehicle.

13. Process for manufacturing a door according to either of claims 10 and 11, **characterized in that** said sliding plane is located inside the vehicle.

14. Process for manufacturing a door according to claim 8, **characterized in that** said mobile panel is mounted to swing around an axis of rotation parallel to the plane formed by said fixed assembly.

15. Door for an automobile, **characterized in that** it is manufactured using the process according to any one of claims 1 to 14.

## Patentansprüche

1. Verfahren zur Herstellung einer Kraftfahrzeugtür,
**dadurch gekennzeichnet, dass** die Tür in zwei Teilen gefertigt wird, die unabhängig voneinander montiert werden:
- ein unteres Teil (21), das keine Mittel zum Führen einer beweglichen Fensterscheibe aufweist, und
- ein oberes Teil (22), das eine Fensteröffnung aufweist,
und **dadurch**, dass das untere Teil (21) und das obere Teil (22) auf der Höhe eines Montagebereiches der Tür, der sich in etwa horizontal und in entsprechender Weise oberhalb des unteren Teils und unterhalb des oberen Teils erstreckt, miteinander verbunden werden (33).

2. Verfahren zur Herstellung einer Kraftfahrzeugtür nach Anspruch 1,
**dadurch gekennzeichnet, dass** der Schritt (31) zum Erstellen eines unteren Türteils (21) die Montage auf einem Strukturelement (211) eines äußeren Karosseriepaneels (212) und einer inneren Verkleidung (213) umfasst.

3. Verfahren zur Herstellung einer Kraftfahrzeugtür nach einem der Ansprüche 1 oder 2,
**dadurch gekennzeichnet, dass** der Schritt zum Verbinden (33) mindestens einen Vorgang aus der Gruppe enthaltend Kleben, Schweißen oder Hartlöten, Löten oder Vernieten einsetzt.

4. Verfahren zur Herstellung einer Kraftfahrzeugtür nach einem der Ansprüche 1 bis 3,
**dadurch gekennzeichnet, dass** das besagte bewegliche Paneel (223) auf zwei Stütz- und/oder Führungselemente (225, 226) montiert wird, so dass es in einer Ebene, die in etwa parallel zu der von der besagten festen Gruppe gebildeten Ebene verläuft, gleiten kann.

5. Verfahren zur Herstellung einer Kraftfahrzeugtür nach einem der Ansprüche 1 bis 4,
**dadurch gekennzeichnet, dass** das bewegliche Paneel (223) so montiert wird, dass es sich in der geschlossenen Position in der von der erwähnten festen Gruppe (222) gebildeten Ebene befindet.

6. Kraftfahrzeugtür, die nach dem Verfahren nach einem der Ansprüche 1 bis 5 gefertigt wurde,
**dadurch gekennzeichnet, dass** sie zwei Teile umfasst, die vorher unabhängig voneinander montiert wurden:
- ein unteres Teil (21), das keine Mittel zum Führen einer beweglichen Fensterscheibe aufweist, und
- ein oberes Teil (22), das eine Fensteröffnung aufweist,
und **dadurch**, dass das untere Teil (21) und das obere Teil (22) auf der Höhe eines Montagebereiches der Tür, der sich in etwa horizontal und in entsprechender Weise oberhalb des unteren Teils und unterhalb des oberen Teils erstreckt, miteinander verbunden sind (33).

7. Kraftfahrzeugtür nach Anspruch 6,
**dadurch gekennzeichnet, dass** das obere Türteil (22) Mittel zum Verschließen der besagten Fensteröffnung aufweist, die eine feste Gruppe (222) und mindestens ein bewegliches Paneel (223) umfasst, wobei dieses bewegliche Paneel in der Lage ist, eine in der besagten festen Gruppe praktizierte Öffnung (228) freizugeben oder zu verdecken.

8. Kraftfahrzeugtür nach Anspruch 7,
**dadurch gekennzeichnet, dass** das besagte bewegliche Paneel (223) auf mindestens ein Stütz- und/oder Führungselement (225, 226) montiert ist, das mit der festen Gruppe (222) verbunden ist.

9. Kraftfahrzeugtür nach einem der Ansprüche 6 bis 8,
**dadurch gekennzeichnet, dass** das obere Türteil (22) auf der Innenfläche einen Rahmen (221) oder zumindest eine in etwa vertikale Stützstrebe aufweist.

10. Kraftfahrzeugtür nach einem der Ansprüche 8 oder 9,
**dadurch gekennzeichnet, dass** mindestens eines der Enden der besagten Stütz- und/oder Führungselemente (225, 226) mit dem Rahmen (221) oder mit der in etwa vertikalen Stützstrebe verbunden ist bzw. sind.

11. Kraftfahrzeugtür nach einem der Ansprüche 7 bis 10,
**dadurch gekennzeichnet, dass** das besagte bewegliche Paneel (223) eine Kinematik aufweist, die sich in zwei voneinander unabhängige Bewegungen aufteilen lässt:
- eine Verriegelungs-/Entriegelungsbewegung, senkrecht zu der von der festen Gruppe gebildeten Ebene, die den Übergang der besagten, von der festen Gruppe gebildeten Ebene, in eine Gleitebene ermöglicht, welche in etwa parallel zu dieser, von der festen Gruppe gebildeten Ebene verläuft,
- eine Gleitbewegung in der besagten Gleitebene.

12. Kraftfahrzeugtür nach einem der Ansprüche 7 bis 10,
**dadurch gekennzeichnet, dass** das bewegliche Paneel (223) eine kontinuierliche Kinematik aufweist, die den allmählichen Übergang der von der besagten festen Gruppe gebildeten Ebene in eine Gleitebene ermöglicht, die in etwa parallel zu der von der festen Gruppe gebildeten Ebene verläuft.

13. Kraftfahrzeugtür nach einem der Ansprüche 11 oder 12,
**dadurch gekennzeichnet, dass** sich die Gleitebene innerhalb des Fahrzeuges befindet.

14. Kraftfahrzeugtür nach einem der Ansprüche 11 oder 12,
**dadurch gekennzeichnet, dass** sich die Gleitebene außerhalb des Fahrzeuges befindet.

15. Kraftfahrzeugtür nach einem der Ansprüche 7 bis 10,
**dadurch gekennzeichnet, dass** das bewegliche Paneel schwenkbar um eine Drehachse angebracht ist, die parallel zu der von der besagten festen Gruppe gebildeten Ebene verläuft.
